# EUROPÄISCHE PATENTSCHRIFT

(11) **EP 0 986 697 B1**
(45) Veröffentlichungstag und Bekanntmachung des Hinweises auf die Patenterteilung: **20.03.2002**
(21) Anmeldenummer: 98934790.1
(22) Anmeldetag: 25.05.1998
(51) Int. Cl.: F01N 3/08, B01D 53/94, B01D 53/86

(54) **VERFAHREN ZUR REGENERATION EINES NOx-SPEICHERKATALYSATORS**
PROCESS FOR REGENERATING AN NOx ACCUMULATOR CATALYTIC CONVERTER
PROCEDE DE REGENERATION D'UN CATALYSEUR ACCUMULATEUR DE NOx

(30) Priorität: 03.06.1997 DE 19723225
(43) Veröffentlichungstag der Anmeldung: 22.03.2000
(73) Patentinhaber: SIEMENS AKTIENGESELLSCHAFT, 80333 München (DE)
(72) Erfinder: SCHÜRZ, Willibald, D-93089 Aufhausen (DE)
(86) Internationale Anmeldenummer: DE9801426
(87) Internationale Veröffentlichungsnummer: WO9855742

(56) Entgegenhaltungen:
- EP-A- 0 444 783
- EP-A- 0 690 213
- EP-A- 0 733 787
- GB-A- 2 318 417

## Beschreibung

Die Erfindung betrifft ein Verfahren zur Regeneration eines NOx-Speicherkatalysators gemäß dem Oberbegriff des Patentanspruches 1.

Ein solches Verfahren ist aus der EP 0 733 781 A2 bekannt.

Um den Kraftstoffverbrauch von Otto-Brennkraftmaschinen deutlich reduzieren zu können, werden in Zukunft Brennkraftmaschinenkonzepte mit magerer Verbrennung zum Einsatz kommen. Zur Erfüllung der geforderten Abgasemissionsgrenzwerte ist bei diesen Konzepten eine spezielle Abgasnachbehandlung notwendig, bei der unter anderem NOx-Speicherkatalysatoren eingesetzt werden. Diese NOx-Speicherkatalysatoren sind auf Grund ihrer Beschichtung in der Lage, die NOx-Verbindungen aus dem Abgas während des Magerbetriebes zu absorbieren und diese während der Regenerationsphase überwiegend in unschädliche Verbindungen umzuwandeln. Der Wirkungsgrad eines Speicherkatalysators hängt wesentlich von einer optimalen Regeneration ab. Ist die Menge an Regenerationsmittel zu gering, wird die eingespeicherte Nitratmenge nicht in ausreichendem Maß abgebaut, wodurch sich der Wirkungsgrad, mit dem NOx aus dem Abgas absorbiert wird, verschlechtert. Ist die Menge an Regenerationsmittel zu hoch, erreicht man zwar optimale NOx-Konvertierungsraten, es tritt aber ein unzulässig hoher Schlupf an Reduktionsmittel (CO, HC) auf, wodurch der CO- und HC-Konvertierungsgrad absinkt. Die optimal erforderliche Regenerationsmittelmenge schwankt über die Lebensdauer eines Fahrzeugs. Eine mögliche Ursache dafür kann in der Änderung des von der Brennkraftmaschine emittierten NOx-Massenstromes liegen. Ein weiterer Grund liegt in der Änderung der Speicherkapazität des Katalysators, die z. B. durch Einspeicherung von Sulfat abnimmt. Im Kraftstoff vorhandener Schwefel wird zu SO₂ verbrannt und durch den Katalysator bei Luftüberschuß (mageres Abgas) zu Sulfat (SO₃²⁻) oxidiert. Sulfat wird von der Beschichtung in ähnlicher Weise gespeichert wie NO₂.

Die Bindung von Sulfat im Speicher ist jedoch wesentlich stärker als jene von NO₂. Während der Regenerationszyklen zur Entladung des Speicherkatalysators (Umwandlung von NO₂ in N₂ und H₂O) wird Sulfat nicht umgewandelt, sondern bleibt im Speicher gebunden. Mit zunehmender Einlagerung von Sulfat verringert sich somit die Kapazität des Speichers für NO₂. Zur Wiederherstellung der ursprünglichen NO₂-Speicherkapazität sind spezielle Regenerationszyklen zum Abbau der gespeicherten Sulfatmenge erforderlich.

Aus der EP 0 597 106 A1 ist ein Verfahren zur Regeneration eines NOx-Speicherkatalysators bekannt, bei dem die vom Speicherkatalysator absorbierte Menge an NOx-Verbindungen in Abhängigkeit von der angesaugten Luft und der Motorlast berechnet wird. Bei Überschreiten einer vorgegebenen Grenzmenge von im NOx-Speicherkatalysator gespeicherten NOx-Verbindungen wird der Brennkraftmaschine ein fettes Gemisch zur Regeneration des Speicherkatalysators zugeführt. Auf diese Weise ist jedoch ein zuverlässiges Einhalten der Abgasgrenzwerte nicht gewährleistet.

In der deutschen Patentanmeldung mit dem Aktenzeichen 197 05 335.1-13 derselben Patentanmelderin ist ein Verfahren zur Auslösung einer Sulfatregenerationsphase für einen Speicherkatalysator beschrieben, bei dem in vorgegebenen Zeitpunkten eine Sulfatregenerationsphase durchgeführt wird. Neben der Menge des abgespeicherten Sulfats wird auch die thermische Alterung des Speicherkatalysators bei der Auslösung der Sulfatregeneration berücksichtigt.

Die Aufgabe der Erfindung beruht darin, ein Verfahren anzugeben, mit dem die Regeneration eines NOx-Speicherkatalysators der eingangs genannten Art verbessert wird.

Diese Aufgabe wird durch die Merkmale des Patentanspruchs 1 gelöst. Der mit der Erfindung erzielbare Vorteil besteht insbesondere darin, daß über die gesamte Lebensdauer des Fahrzeugs die für eine optimale NOx-Konvertierungsrate erforderliche Regenerationsmittelmenge zugeführt wird.

Die abhängigen Ansprüche betreffen vorteilhafte Weiterbildungen und Ausgestaltungen der im folgenden anhand der Zeichnungen erläuterten Erfindung. Hierbei zeigt:
- Figur 1: eine schematische Darstellung einer Brennkraftmaschine mit einem NOx-Speicherkatalysator,
- Figur 2: ein Diagramm für den zeitlichen Verlauf des Sondenausgangssignals während der Regeneration des Speicherkatalysators und
- Figur 3: einen Ablaufplan zur Durchführung des erfindungsgemäßen Verfahrens.

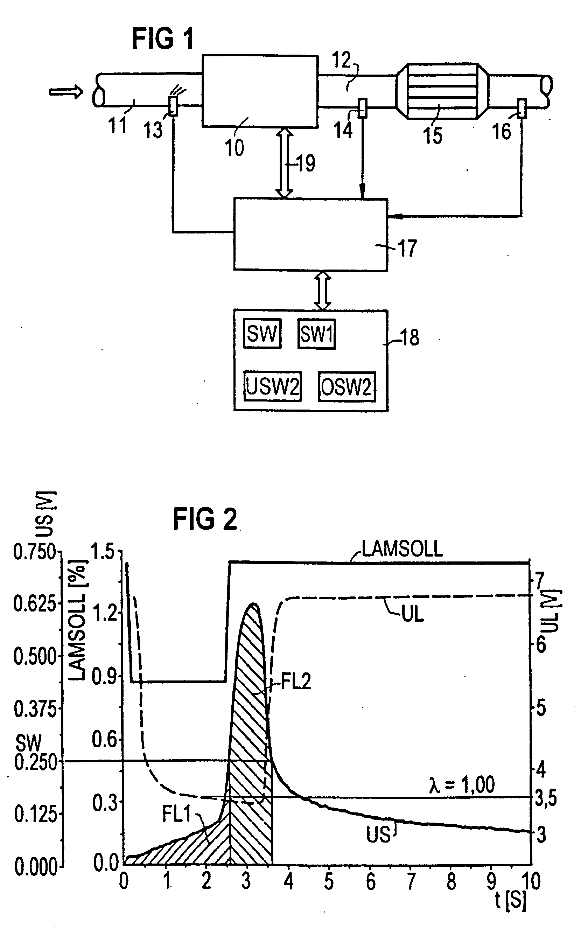

Figur 1 zeigt in Form eines Blockschaltbildes eine Anordnung, bei der das erfindungsgemäße Verfahren angewendet wird. Dabei sind nur die Teile und Komponenten dargestellt, die für das Verständnis der Erfindung notwendig sind.

Eine Brennkraftmaschine 10 ist mit einem Ansaugtrakt 11 und einem Abgastrakt 12 verbunden und umfaßt eine Kraftstoffzumeßeinrichtung, von der nur schematisch ein Einspritzventil 13 gezeigt ist. Der Kraftstoff kann dabei in das Saugrohr oder direkt in den Brennraum eingespritzt werden. Im Abgastrakt 12 sind in Strömungsrichtung des Abgases gesehen eine erste Lambdasonde 14, ein NOx-Speicherkatalysator 15 und eine zweite Lambdasonde 16 vorgesehen. Mit Hilfe der ersten Lambdasonde 14 (Regelsonde) wird das Kraftstoff-Luftverhältnis im Abgas vor dem Speicherkatalysator 15 bestimmt. Die zweite Lambdasonde 16 (Monitorsonde) dient u.a. zur Überprüfung des Speicherkatalysators 15. Weiterhin ist eine Steuerungseinrichtung 17 mit einem Speicher 18 dargestellt, in dem u.a. eine Mehrzahl von Schwellenwerten gespeichert sind, deren Bedeutung anhand der folgenden Figuren noch näher erläutert wird. Zur Steuerung und Regelung der Brennkraftmaschine 10 ist die Steuerungseinrichtung 17 über eine nur schematisch dargestellte Daten - und Steuerleitung 19 noch mit weiteren Sensoren und Aktoren verbunden.

Das Regenerationsverfahren wertet das Signal der Lambdasonde 16 nach dem NOx-Speicherkatalysator 15 aus. Die Figur 2 zeigt den zeitlichen Verlauf des Ausgangssignals US einer Zirkonoxid-Lambdasonde (ZrO₂-Sprungsonde) während der Regeneration des NOx-Speicherkatalysators. Außerdem ist in diese Darstellung der Verlauf des Lambda-Sollwertes LAMSOLL eingezeichnet. Der Lambdasollwert LAMSOll springt für die Regeneration des Speicherkatalysators von einem Wert λ = 1,40 bei Magerbetrieb auf einen Wert λ = 0,85. Nach Abschluß der Regeneration wird wieder Magerbetrieb eingestellt. Am Ende der vorangegangenen Magerphase liegt das Ausgangssignal US der ZrO₂-Sonde bei etwa 0,03V. Nach Auslösen einer Regenerationsphase steigt dieses Signal kontinuierlich an. Gegen Ende der Regenerationsphase unterschreitet die Luftzahl Lambda den Wert 1 und das Sondensignal US steigt steil an.

Für eine optimale Regeneration des Speicherkatalysators gelten folgende Bedingungen:

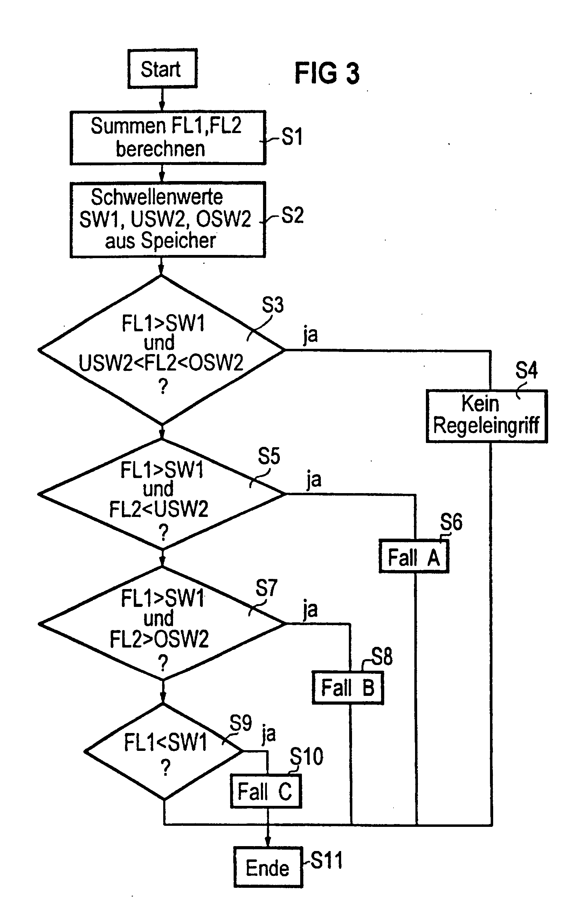

Es werden zwei Summenwerte berechnet. Ein erster Summenwert FL1 wird aus den mit bestimmter Frequenz (z. B. 100 Hz) abgetasteten Sondensignalspannungen US ab Beginn der Regeneration bis zum Überschreiten eines Schwellenwertes SW (z. B. 0,25 V) berechnet. Dieser Summenwert entspricht der mit dem Bezugszeichen FL1 in Figur 3 gekennzeichneten Fläche. Ein zweiter Summenwert wird aus den mit gleicher Frequenz abgetasteten Sondensignalspannungen US ab Überschreiten des Schwellwertes SW bis zum erneuten Unterschreiten des Schwellwertes SW berechnet. Dieser Summenwert entspricht der mit dem Bezugszeichen FL2 in Figur 3 gekennzeichneten Fläche.

Die optimale Regenerationsmittelmenge ist erreicht, wenn der Summenwert FL1 größer als ein Schwellenwert SW1 ist und der Summenwert FL2 zwischen einem unteren Schwellenwert USW2 und einem oberen Schwellenwert OSW2 liegt.

Die Figur 3 zeigt anhand eines Ablaufplanes das Verfahren zur Regelung der Regenerationsmittelmenge für den NOx-Speicherkatalysator.

In einem ersten Verfahrensschritt S1 werden die Summenwerte (Flächen) FL1 und FL2 berechnet und zwischengespeichert. Anschließend werden im Verfahrensschritt S2 aus dem Speicher 18 (Fig.1) der Schwellenwert SW1 für die Summe FL1 und die Schwellenwerte USW2 und OSW2 für die Summe FL2 ausgelesen.

Im Verfahrensschritt S3 wird überprüft, ob eine optimale Regenerationsmittelmenge erreicht ist. Dies ist der Fall, wenn der Summenwert FL1 größer als der Schwellenwert SW1 ist und der Summenwert FL2 in einem Bereich liegt, der von dem unteren Schwellenwert USW2 und dem oberen Schwellenwert OSW2 begrenzt ist.

Sind diese beiden Bedingungen erfüllt, so wird im Verfahrensschritt S4 festgestellt, daß kein Regeleingriff nötig ist und das Verfahren ist beendet (Programmpunkt S11).

Sind diese beiden Bedingungen im Verfahrensschrit S3 nicht erfüllt, so ist die optimale Regenerationsmittelmenge nicht erreicht und es werden in Abhängigkeit der ermittelten Summenwerte FL1, FL2 verschiedene Regelungseingriffe durchgeführt, um eine optimale Regeneration des Speicherkatalysators zu erreichen.

Im Verfahrensschritt S5 wird geprüft, ob der Summenwert FL1 größer als der Schwellenwert SW1 und der Summenwert FL2 kleiner als der untere Schwellenwert USW2 ist. Ein positives Ergebnis dieser Abfrage bedeutet, daß die Regenerationsmittelmenge zu klein ist.

Im Verfahrensschritt S6 wird deshalb die Regenerationsmittelmenge vergrößert (Fall A). Die Vergrößerung der Regenerationsmittelmenge kann durch Veränderung der Luftzahl zur Katalysatorregeneration in Richtung fett bzw. durch Verkleinerung des Dekrementes der Katalysatorbeladung erfolgen, wie es beispielsweise in der deutschen Patentanmeldung 196 07 151.8 beschrieben ist. Die Verkleinerung dieses Dekrementes führt zu einer Verlängerung der Regenerationsphase. Die Variation der Regenerationsluftzahl ist nur in engen Grenzen (z. B. λ = 0,75 - 0,85) möglich. Nach Vergrößern der Regenerationsmittelmenge ist das Verfahren beendet (Verfahrensschritt S11).

Bei negativem Ergebnis der Abfrage in Verfahrensschritt S5 wird zum Verfahrensschritt S7 verzweigt. Dort wird geprüft, ob der Summenwert FL1 größer als der Schwellenwert SW1 und der Summenwert FL2 größer als der obere Schwellenwert OSW2 ist. Ein positives Ergebnis dieser Abfrage bedeutet, daß die Regenerationsmittelmenge zu groß ist. Im Verfahrensschritt S8 wird deshalb die Regenerationsmittelmenge verkleinert (Fall B). Die Verkleinerung der Regenerationsmittelmenge kann durch Veränderung der Luftzahl zur Katalysatorregeneration in Richtung mager bzw. durch Vergrößerung des Dekrementes der Katalysatorbeladung erfolgen, wie es beispielsweise in der deutschen Patentanmeldung 196 07 151.8 beschrieben ist. Die Vergrößerung dieses Dekrementes führt zu einer Verkürzung der Regenerationsphase. Nach Verkleinern der Regenerationsmittelmenge ist das Verfahren beendet (Verfahrensschritt S11).

Bei negativem Ergebnis der Abfrage in Verfahrensschritt S7 wird zum Verfahrensschritt S9 verzweigt. Dort wird geprüft, ob der Summenwert FL1 kleiner als der Schwellenwert SW1 ist. Ist dies nicht der Fall, so muß FL1 = SW1 gelten, d.h. es kein Regeleingriff nötig und das Verfahren ist beendet (Verfahrenssschritt S11), andernfalls wird mit Verfahrensschritt S10 fortgefahren.

Liegt der Summenwert FL1 unterhalb des Schwellenwertes SW1, so bedeutet dies, daß sich die Speicherkapazität des Katalysators verringert hat (Fall C). Zur Erzielung eines optimalen Konvertierungsverhaltens ist eine Verkürzung der Katalysatorbeladungsphase erforderlich. Dies erfolgt beispielsweise durch eine Verkleinerung der in einem Katalysatormodell berechneten Speicherkapazität. Durch das in der deutschen Patentanmeldung 196 07 151.8 beschriebene Verfahren wird durch eine Verringerung der Modellspeicherkapazität die Bedingung für eine Regeneration früher erreicht und somit die Dauer der Magerphase verkürzt. Ebenfalls muß der Schwellenwert SW1 verringert werden. Unterschreitet der Schwellenwert SW1 einen unteren Grenzwert, bedeutet dies, daß die Katalysatorspeicherkapazität z. B. durch Sulfateinlagerung einen unteren Grenzwert erreicht hat. In diesem Fall muß eine Sulfätregeneration angefordert und durchgeführt werden, wie es beispielsweise in der deutschen Patentanmeldung 197 05 335.1-13 beschrieben ist. Nach erfolgter Sulfatregeneration kann der Schwellenwert SW1 wieder auf den Ausgangswert hochgesetzt werden.

Die erwähnten Schwellenwerte werden auf dem Motorprüfstand ermittelt.

Die Erfindung wurde anhand eines Beispiels erläutert, bei dem zur Durchführung des Regenerationsverfahrens das Signal einer, nach dem Speicherkatalysator angeordneten Sprungsonde (ZrO2-Sonde) ausgewertet wird. Es kann aber auch das Signal einer linearen Lambdasonde ausgewertet werden, welche einen nahezu linearen Zusammenhang zwischen Sondenspannung und Luftzahl im Bereich λ = 0,88 - λ = 1,12 aufweist. Der Verlauf des Signals einer solchen Sonde ist in Figur 3 in strichlierter Darstellung eingezeichnet und mit UL bezeichnet. Der Spannungswert beträgt bei λ = 1,00 etwa 3,50 Volt. Daraus ist zu ersehen, daß bei optimaler Regenerationsmittelmenge der λ = 1,00 Wert nur sehr geringfügig unterschritten wird. Die Auswertung eines, von einer linearen Sonde abgegebenen Signals zur Regelung der Regenerationsmittelmenge muß aufgrund des sehr geringen Spannungshubes bei unterschiedlicher Regenerationsmittelmenge deshalb mit hoher Genauigkeit erfolgen.

## Patentansprüche

1. Verfahren zur Regeneration eines NOx-Speicherkatalysators (15) für eine mit Luftüberschuß arbeitende Brennkraftmaschine (10), mit einem Sauerstoffsensor (16) stromabwärts des Speicherkatalysators (15), wobei eine zur Wiederherstellung der NOx-Speicherkapazität erforderliche Regenerationsphase durch Zuführen einer Regenerationsmittelmenge durchgeführt wird, indem kurzzeitig der Brennkraftmaschine (10) ein Kraftstoff/Luftgemisch zugeführt wird, das einer Luftzahl kleiner als 1 vor dem Speicherkatalysator entspricht,
das Ausgangssignal (US) des Sauerstoffsensors (16) während und nach der Regenerationsphase erfaßt wird und aus dem zeitlichen Verlauf des Ausgangssignals (US) ein Kriterium abgeleitet wird, das eine Aussage darüber enthält, ob die Regenerationsmittelmenge zur Erzielung eines optimalen Wirkungsgrades des Speicherkatalysators (15) geändert werden muß,
**dadurch gekennzeichnet, daß**
als Kriterium zwei Summenwerte (FL1, FL2) gebildet werden, und wobei der erste Summenwert (FL1) aus dem mit einer bestimmten Frequenz abgetasteten Ausgangssignal (US) ab Beginn der Regeneration bis zum Überschreiten des Ausgangssignals (US) über einen ersten vorgegebenen Schwellenwert (SW) berechnet wird, der zweite Summenwert (FL2) aus dem mit gleicher Frequenz abgetasteten Ausgangssignal (US) ab Überschreiten dieses ersten Schwellenwertes (SW) bis zum erneuten Unterschreiten des Ausgangssignals (US) unter den ersten Schwellenwert (SW) berechnet wird, die zwei Summenwerte (FL1, FL2) mit zugehörigen weiteren Schwellenwerten (SW1, USW2, OSW2) verglichen werden und in Abhängigkeit des Ergebnisses des Vergleiches die Regenerationsmittelmenge konstant gehalten, vergrößert oder verkleinert wird.

2. Verfahren nach Anspruch 1, **dadurch gekennzeichnet, daß** die Regenerationsmittelmenge konstant gehalten wird, wenn der erste Summenwert (FL1) größer als ein Schwellenwert (SW1) und der zweite Summenwert (SW2) innerhalb eines durch einen unterer Schwellenwert (USW2) und einen oberen Schwellenwert (OSW2) liegenden Bereiches liegt.

3. Verfahren nach Anspruch 1, **dadurch gekennzeichnet, daß** die Regenerationsmittelmenge erhöht wird, wenn der erste Summenwert (FL1) größer als ein Schwellenwert (SW1) und der zweite Summenwert (SW2) kleiner als ein unterer Schwellenwert (USW2) ist.

4. Verfahren nach Anspruch 1, **dadurch gekennzeichnet, daß** daß die Regenerationsmittelmenge erniedrigt wird, wenn der erste Summenwert (FL1) größer als ein Schwellenwert (SW1) und der zweite Summenwert (SW2) größer als ein oberer Schwellenwert (OSW2) ist.

5. Verfahren nach Anspruch 3, **dadurch gekennzeichnet, daß** die Regenerationsmittelmenge erhöht wird, indem die Regenerationsphase verlängert wird.

6. Verfahren nach Anspruch 4, **dadurch gekennzeichnet, daß** Regenerationsmittelmenge erniedrigt wird, indem die Regenerationsphase verkürzt wird.

7. Verfahren nach Anspruch 1 **dadurch.gekennzeichnet,**
- **daß** die Dauer der Magerphase, bei der die Brennkraftmaschine (10) mit Luftüberschuß betrieben wird, verkürzt wird und
- für den Speicherkatalysator (15) eine Sulfatregeneration durchgeführt wird, wenn der Summenwert (FL1) kleiner als der Schwellenwert (SW1) ist.

8. Verfahren nach einem der vorhergehenden Ansprüche, **dadurch gekennzeichnet, daß** als Sauerstoffsensor (16) eine binäre Lambdasonde mit einer bezüglich seines Ausgangssignals (US) sprungförmiger Charakteristik eingesetzt wird.

## Claims

1. Method for the regeneration of an NOx storage-type catalytic converter (15) for an internal combustion engine (10) operating with excess air and having an oxygen sensor (16) located downstream of the storage-type catalytic converter (15), whereby a regeneration phase necessary for restoring the NOx storage capacity is implemented by feeding in a quantity of regenerating agent, through supplying to the internal combustion engine (10) for a short period of time a fuel/air mixture corresponding to an air ratio of less than 1 before the storage-type catalytic converter, and whereby the output signal (US) of the oxygen sensor (16) is measured during and after the regeneration phase, and a criterion is derived from the time curve of the output signal (US) which provides information on whether the quantity of regenerating agent needs to be changed in order to achieve optimum efficiency in the operation of the storage-type catalytic converter (15), **characterised in that** as a criterion, two summation values (FL1, FL2) are formed, and whereby the first summation value (FL1) is calculated from the output signal (US), sampled at a given frequency, from the beginning of the regeneration process onwards until the point is reached where the output signal (US) exceeds a first specified threshold (SW), the second summation value (FL2) is calculated from the output signal (US), sampled at the same frequency, from the point at which this first threshold value (SW) is exceeded until the point at which the output signal (US) falls below the first threshold value (SW) again, the two summation values (FL1, FL2) are compared with associated further threshold values (SW1, USW2, OSW2), and the quantity of regenerating agent is kept constant, increased or reduced depending on the result of said comparison.

2. Method according to Claim 1, **characterised in that** the quantity of regenerating agent is kept constant if the first summation value (FL1) is larger than a threshold value (SW1) and if the second summation value (SW2) lies within a range bounded by a lower threshold value (USW2) and an upper threshold value (OSW2).

3. Method according to Claim 1, **characterised in that** the quantity of regenerating agent is increased if the first summation value (FL1) is larger than a threshold value (SW1) and if the second summation value (SW2) is smaller than a lower threshold value (USW2).

4. Method according to Claim 1, **characterised in that** the quantity of regenerating agent is reduced if the first summation value (FL1) is larger than a threshold value (SW1) and if the second summation value (SW2) is larger than an upper threshold value (OSW2).

5. Method according to Claim 3, **characterised in that** the quantity of regenerating agent is increased by lengthening the regeneration phase.

6. Method according to Claim 4, **characterised in that** the quantity of regenerating agent is reduced by shortening the regeneration phase.

7. Method according to Claim 1, **characterised in that**
- the duration of the lean phase, in which the internal combustion engine (10) is operated with excess air, is reduced, and that
- a sulphate regeneration is performed for the storage-type catalytic converter (15) if the summation value (FL1) is smaller than the threshold value (SW1).

8. Method according to one of the preceding claims, **characterised in that** a binary lambda probe having a step response regarding its output signal (US) is used as the oxygen sensor (16).

## Revendications

1. Procédé pour la régénération d'un catalyseur-accumulateur de NOx (15) pour un moteur à combustion interne (10) travaillant avec un excès d'air, comprenant un capteur d'oxygène (16) en aval du catalyseur-accumulateur (15), dans lequel une phase de régénération nécessaire pour le rétablissement de la capacité d'accumulation des NOx est exécutée par l'amenée d'une quantité de milieu de régénération, par le fait qu'on envoie brièvement au moteur à combustion interne (10) un mélange carburant/air qui correspond à un indice d'air inférieur à 1 en amont du catalyseur-accumulateur, on capte le signal de sortie (US) du capteur d'oxygène (16) pendant et après la phase de régénération et on dérive de la variation dans le temps du signal de sortie (US), un critère qui contient une indication qui fait savoir si la quantité de milieu de régénération destinée à l'obtention d'un rendement optimal d'un catalyseur-accumulateur (15) doit être modifiée,
**caractérisé**
**en ce que**, deux sommes (FL1, FL2) sont formées, en tant que critère et la première somme (FL1) est calculée à partir du signal de sortie (US) scruté à une fréquence donnée, depuis le début de la régénération jusqu'à ce que le signal de sortie (US) devienne supérieur à un premier seuil prédéterminé (SW), la deuxième somme (FL2) est calculée à partir du signal de sortie (US) scruté avec la même fréquence, depuis le passage au-dessus de ce premier seuil (SW) jusqu'au nouveau passage au-dessous du signal de sortie (US) au-dessous du premier seuil (SW), les deux sommes (FL1, FL2) sont comparées à d'autres seuils correspondants (SW1, USW2, OSW2) et, en fonction du résultat de la comparaison, la quantité de milieu de régénération est maintenue constante, augmentée ou diminuée.

2. Procédé selon la revendication 1, **caractérisé en ce que** la quantité de milieu de régénération est maintenue constante lorsque la première somme (FL1, SW1) est supérieure à un seuil (SW1) et que la deuxième somme (SW2) est comprise dans une plage délimitée par un seuil inférieur (USW2) et un seuil supérieur (OSW2).

3. Procédé selon la revendication 1, **caractérisé en ce que** la quantité de milieu de régénération est augmentée lorsque la première somme (FL1) est supérieure à un seuil (SW1) et que la deuxième somme (SW2) est inférieure à un seuil inférieur (USW2).

4. Procédé selon la revendication 1, **caractérisé en ce que** la quantité de milieu de régénération est réduite lorsque la première somme (FL 1) est supérieure à un seuil (SW1) et que la deuxième somme (SW2) est supérieure à un seuil supérieur (OSW2).

5. Procédé selon la revendication 3, **caractérisé en ce que** la quantité de milieu de régénération est augmentée par le fait que la phase de régénération est allongée.

6. Procédé selon la revendication 4, **caractérisé en ce que** la quantité de milieu de régénération est réduite par le fait que la phase de régénération est raccourcie.

7. Procédé selon la revendication 1, **caractérisé**
- **en ce que** la durée de la phase pauvre dans laquelle le moteur à combustion interne (10) travaille avec un excès d'air, est raccourcie et
- **en ce que**, pour le catalyseur-accumulateur (15), une régénération du sulfate est exécutée lorsque la somme (FL1) est inférieure au seuil (SW1).

8. Procédé selon une des revendications précédentes, **caractérisé en ce qu'**on utilise comme capteur d'oxygène (16) une sonde Lambda binaire, possédant une caractéristique en forme de saut pour son signal de sortie.
